# FASCICULE DE BREVET EUROPEEN

(11) **EP 0 508 853 B1**
(45) Date de publication et mention de la délivrance du brevet: **21.09.1994**
(21) Numéro de dépôt: 92400818.8
(22) Date de dépôt: 25.03.1992
(51) Int. Cl.: B60S 1/52, B60Q 1/00

(54) **Dispositif escamotable de lavage de la glace d'un bloc optique notamment d'un véhicule automobile, et bloc optique en comportant application**
Einziehbare Waschvorrichtung für Abdeckscheiben von Beleuchtungseinheiten, insbesondere für Kraftfahrzeuge, und damit ausgestattete Beleuchtungseinheit
Retractable device washing the lens of a lighting unit, particularly for motor vehicles, and lighting unit thus equipped

(30) Priorité: 08.04.1991 FR 9104260
(43) Date de publication de la demande: 14.10.1992
(73) Titulaire: AUTOMOBILES PEUGEOT, 75116 Paris (FR); AUTOMOBILES CITROEN, 92200 Neuilly-sur-Seine (FR)
(72) Inventeur: Robert, Christian, F-78510 Triel sur Seine (FR)
(74) Mandataire: Habasque, Etienne Joel Jean-François

(56) Documents cités:
- DE-A- 2 926 305
- DE-A- 2 945 104
- DE-C- 3 518 685
- FR-A- 2 605 906
- FR-A- 2 651 188

## Description

La présence invention concerne un bloc optique avec glace et dispositif escamotable de lavage de la glace intégré notamment d'un véhicule automobile.

De tels dispositifs peuvent être utilisés pour laver la glace d'un projecteur avant d'un véhicule automobile ou d'un feu de signalisation disposé à l'arrière du véhicule.

On connait déjà dans l'état de la technique différents dispositifs de lavage associés à des projecteurs d'un véhicule automobile.

Ces dispositifs comprennent généralement un ou plusieurs gicleurs disposés dans un butoir en saillie par rapport à la surface extérieure d'un pare-chocs du véhicule, en-dessous du projecteur. Ces gicleurs sont reliés par l'intermédiaire de canalisations à différents moyens d'alimentation comprenant par exemple une pompe et un réservoir de liquide de lavage.

Cependant, de tels dispositifs fixes présentent un certain nombre d'inconvénients dans la mesure où ils nécessitent de prévoir des parties en saillie vers l'extérieur du pare-chocs, ce qui n'est pas compatible avec le style de certains véhicules en cours de conception.

On connait également dans l'état de la technique des lave-projecteurs télescopiques qui comportent un gicleur fixé à l'extrémité de la tige d'un piston portegicleur coulissant à l'intérieur d'un cylindre, ce cylindre étant fixé à un organe de la structure du véhicule et étant relié à des moyens d'alimentation en liquide de lavage.

La course du piston est généralement obtenue par la poussée du liquide de lavage entraînant la translation du piston porte-gicleur entre une position escamotée et une position extraite de service.

Ce dernier comporte une soupape tarée pour laisser passer le flux de liquide de lavage vers le gicleur, lorsque le gicleur est en position de lavage. Le porte-gicleur revient à sa position de repos sous l'action d'un ressort de rappel, lorsque la pression du liquide est relâchée.

Le cylindre est généralement placé dans une disposition sensiblement horizontale à l'intérieur d'une pièce de structure telle qu'un pare-chocs disposé en-dessous du projecteur.

Il est généralement nécessaire d'effectuer un déplacement de grande amplitude pour mettre le porte-gicleur en position de service, l'ensemble mobile constitué par la tige de piston et le porte-gicleur restant disposé suivant un axe horizontal fixe. La course du piston nécessaire pour atteindre le point fonctionnel peut présenter une très grande longueur; en conséquence, le cylindre dans lequel se déplace le piston doit lui-même présenter une grande longueur, si bien qu'il peut être difficile ou impossible de placer le cylindre dans la structure du pare-chocs et de prévoir le montage de projecteurs complémentaires.

Dans la demande de brevet 90-11452 déposée par les sociétés AUTOMOBILES PEUGEOT et AUTOMOBILES CITROEN, et publiée le 20 mars 1992 sous le numéro FR-A-2 666 777, on a proposé un lave-projecteur escamotable dont le cylindre est placé dans une disposition verticale à un niveau inférieur au projecteur et dont le porte-gicleur est relié à la tige du piston de manière articulée autour d'un axe horizontal. Le porte-gicleur comporte, à son extrémité opposée au gicleur par rapport à l'axe d'articulation, un organe de basculement destiné à venir en butée, lors du déplacement vertical et vers le haut de la tige de piston, contre une partie de la structure du véhicule.

Cette disposition permet de limiter la longueur du cylindre qui peut être logé entièrement à l'intérieur du pare-chocs. En outre, le basculement du porte-gicleur permet d'obtenir une bonne position de lavage de la vitre du projecteur.

Cependant, en fonction du style du pare-chocs, il n'est pas toujours possible de placer le cylindre dans une position verticale à l'intérieur du pare-chocs. En outre, un tel dispositif comporte des parties articulées entre elles et un organe de basculement du porte-gicleur qui nécessite un réglage précis pour obtenir l'inclinaison voulue du porte-gicleur dans sa position de service.

Dans la demande de brevet 91-00685 déposée par les sociétés AUTOMOBILES PEUGEOT et AUTOMOBILES CITROEN et publiée le 27 juillet 1992 sous le numéro FR-A-2 671 773, on a proposé un lave-projecteur escamotable comportant un cylindre placé avec son axe sensiblement horizontal, à un niveau inférieur au projecteur et un porte-gicleur relié à la tige d'un piston monté mobile dans le cylindre, de manière articulée autour d'un axe horizontal. Le porte-gicleur comporte un organe de basculement destiné à venir en butée lors du déplacement horizontal de la tige de piston vers l'extérieur de la structure du véhicule, contre une partie de cette structure.

Le dispositif comporte donc des parties articulées entre elles et un organe de basculement du porte-gicleur qui nécessite un réglage précis pour obtenir l'inclinaison voulue du porte-gicleur dans sa position de service.

On conçoit que les différents dispositifs de l'état de la technique présentent donc une structure relativement complexe, un encombrement important et que leur intégration dans la structure du véhicule est relativement complexe et parfois peu esthétique.

Le but de l'invention est donc de résoudre ces problèmes en proposant un dispositif escamotable de lavage de la glace d'un bloc optique notamment d'un véhicule automobile, qui soit simple, efficace, et parfaitement intégré à la ligne générale du véhicule.

A cet effet, l'invention a pour objet un bloc optique avec glace et dispositif escamotable de lavage de la glace intégré, notamment d'un véhicule automobile, du type comportant un gicleur fixé sur la tige d'un piston porte-gicleur monté coulissant à l'intérieur d'un cylindre fixé sur un organe du véhicule, de manière à être mobile par rapport à la structure du véhicule entre une position escamotée dans la structure et une position extraite de service, des moyens d'alimentation en liquide de lavage et des moyens élastiques de rappel du piston porte-gicleur en position escamotée (Bloc et dispositif du type divulgué par FR-A-2 651 188 ou DE-C-3 518 685), caractérisé en ce que le bloc optique comporte un logement dans lequel est prévue une paroi transversale délimitant dans ce logement, d'un côté, un évidement de réception de l'extrémité du piston portegicleur portant le gicleur et l'enjoliveur et d'un autre côté, le cylindre de piston et munie d'un évidement central pour le passage de la tige de piston, de manière que le dispositif soit intégré dans le bloc optique.

Divers modes de réalisation sont précisés dans les revendications 2 à 9 dépendantes.

L'invention sera mieux comprise à l'aide de la description qui va suivre, donnée uniquement à titre d'exemple et faite en se référant aux dessins annexés, sur lesquels :
- la Fig.1 représente une vue partielle de la face avant d'un véhicule automobile dont un bloc optique est équipé d'un dispositif de lavage selon l'invention;
- la Fig.2 représente une vue en coupe d'un dispositif de lavage selon l'invention en position escamotée;
- la Fig.3 représente une vue en coupe d'un dispositif de lavage selon l'invention lors du déplacement d'un piston porte-gicleur entrant dans la constitution de ce dispositif, vers une position extraite de service; et
- la Fig.4 représente une vue en coupe d'un dispositif de lavage selon l'invention dans laquelle le piston porte-gicleur est en position extraite de service.

On décrira dans la suite de la description, l'utilisation d'un dispositif de lavage selon l'invention pour le lavage de la glace d'un projecteur avant d'un véhicule automobile. Il va de soi que ce dispositif peut également être utilisé pour laver n'importe quel autre feu de signalisation par exemple disposé à l'arrière du véhicule.

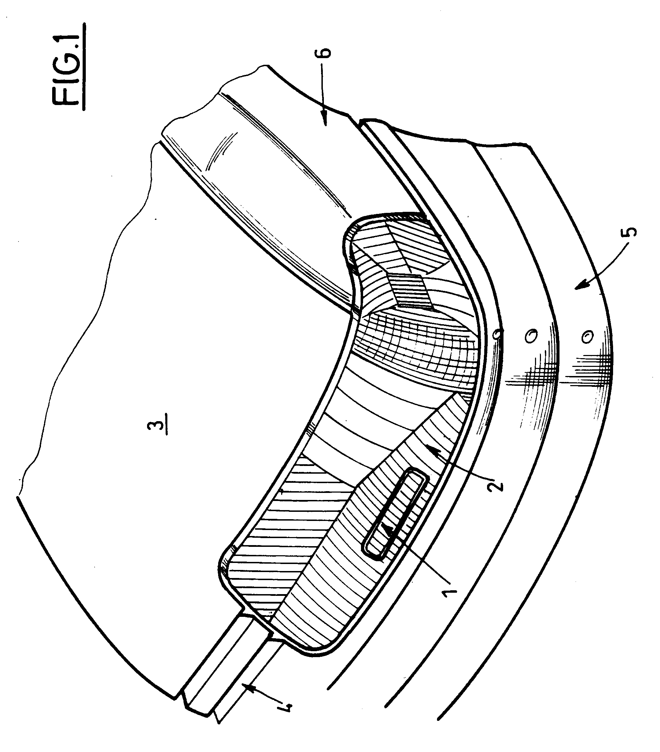

Comme on peut le voir sur la Fig.1, le dispositif de lavage selon l'invention, désigné par la référence générale 1 sur cette figure, peut être intégré dans le bloc optique d'un projecteur avant 2 d'un véhicule. Ce bloc optique est monté dans un coin du véhicule, entre le capot 3, la calandre 4, le pare-chocs 5 et une aile 6 de la structure de celui-ci.

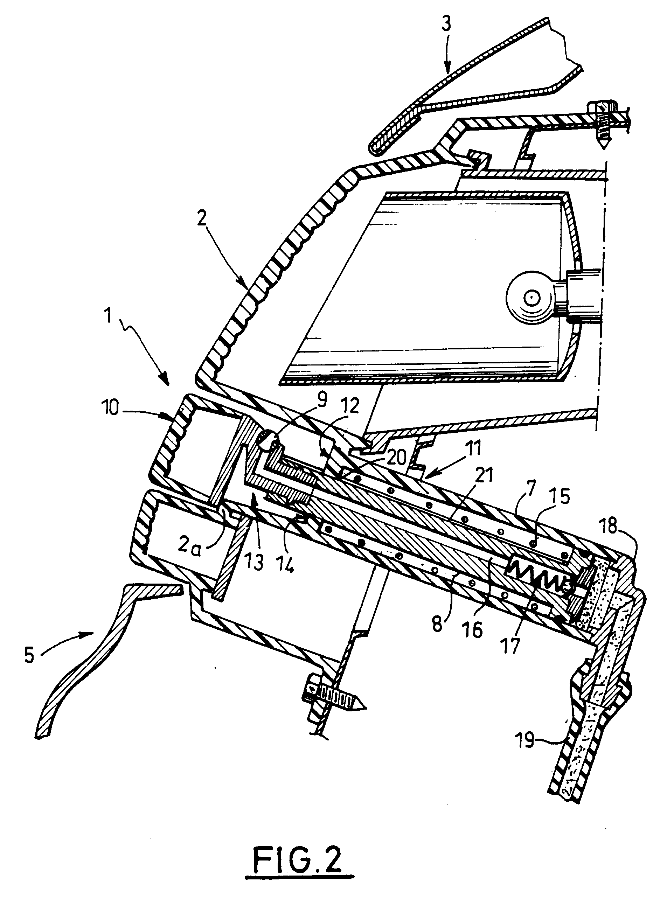

On peut voir plus clairement sur les figures 2,3 et 4, que le dispositif de lavage selon l'invention est intégré dans ce bloc optique et est déplaçable entre une position escamotée dans celui-ci et une position extraite de service.

Plus particulièrement, ce dispositif de lavage comporte un cylindre de piston 7 dans lequel est monté déplaçable un piston porte-gicleur 8 dont la tige porte à son extrémité libre, un gicleur 9 et un enjoliveur 10 d'aspect se rapprochant par exemple de l'aspect général du bloc optique, de manière que le dispositif de lavage selon l'invention, soit parfaitement intégré dans le bloc optique en position escamotée.

Plus particulièrement, le bloc optique comporte un logement désigné par la référence générale 11 comportant un paroi transversale 12, délimitant dans ce logement, d'une part le cylindre de piston 7 et d'autre part, un évidement 13 débouchant vers l'avant du bloc optique, de réception de l'extrémité libre de la tige de piston 8 portant le gicleur 9 et l'enjoliveur 10. Cette paroi transversale 12 est munie d'un évidement central 14 pour le passage de la tige du piston.

Des moyens élastiques de rappel 15 constitués par exemple par un ressort hélicoïdal, sont disposés autour de la tige du piston dans la chambre du cylindre en avant du piston pour rappeler celui-ci en position escamotée.

On conçoit donc que le dispositif selon l'invention est parfaitement intégré dans le bloc optique du projecteur du véhicule dans la mesure où celui-ci comporte un évidement 13 de réception, en position escamotée, de l'extrémité de la tige du piston porte-gicleur et de l'enjoliveur 10, de manière que ce dernier s'étende dans le prolongement de la surface de la glace du bloc optique. La paroi transversale 12 du logement 11 de ce bloc permet de faire une séparation entre cet évidement 13 et le cylindre de piston 7, disposé dans le prolongement de cet évidement 13 et dans lequel se déplace le piston 8.

Ce piston 8 comporte un canal 16 dont l'une des extrémités débouche dans le gicleur 9 et dont l'autre extrémité débouche dans la chambre du cylindre de piston à l'arrière de celui-ci.

Une soupape tarée 17 peut être disposée dans ce canal pour laisser passer le flux de liquide de lavage, vers le gicleur, lorsque le piston et donc le gicleur sont en position extraite de service, comme cela sera décrit plus en détail par la suite.

La chambre arrière du cylindre du piston est reliée par exemple par l'intermédiaire d'un embout 18 à un conduit 19 de raccordement du dispositif selon l'invention à des moyens d'alimentation en liquide de lavage, non représentés, et comprenant par exemple, un réservoir de stockage de liquide de lavage et une pompe actionnée par l'utilisateur à partir du tableau de bord du véhicule.

On notera que le dispositif comporte également des moyens de maintien de la tige du piston et donc de l'enjoliveur et du gicleur dans une orientation déterminée par rapport au reste du bloc optique. Ceci est particulièrement important pour que le lavage soit efficace et que l'enjoliveur retrouve toujours une bonne position escamotée dans l'évidement 13 du bloc optique.

Dans le mode de réalisation représenté sur ces figures, ces moyens de maintien en position comprennent une partie en saillie 20 de la paroi transversale 12 du logement 11, adaptée pour coopérer avec une rainure correspondante 21 de la tige du piston.

Bien entendu, d'autres modes de réalisation de ces moyens de maintien peuvent être envisagés.

Ainsi par exemple, le piston et le cylindre peuvent présenter des sections elliptiques.

On conçoit donc que dans la position représentée sur la figure 2, les moyens élastiques de rappel 15 maintiennent le piston 8 dans une position dite escamotée dans le cylindre, dans laquelle une partie de l'enjoliveur est en appui contre une surface de butée 2a du bloc optique.

Dans cette position, l'extrémité libre de la tige du piston, portant le gicleur 9 et l'enjoliveur 10, est reçue dans l'évidement 13 du bloc optique, de sorte que cet enjoliveur se trouve dans le prolongement de la glace du bloc optique pour obtenir une parfaite intégration du dispositif dans celui-ci.

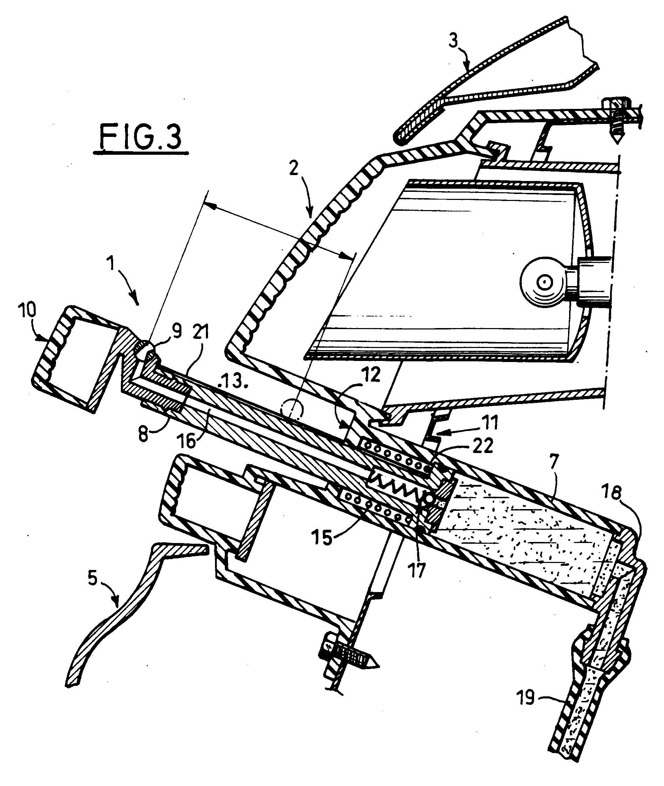

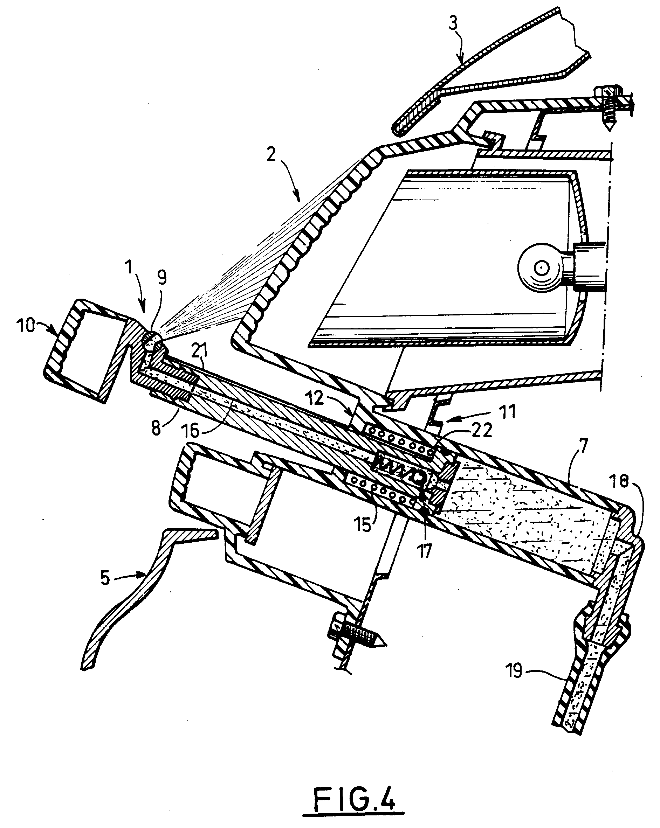

Lorsque l'utilisateur actionne la pompe d'alimentation du dispositif de lavage, du liquide de lavage sous pression est introduit à travers le conduit 19 et l'embout 18, dans la chambre arrière du cylindre 7 de piston. Le piston a alors tendance à se déplacer dans le cylindre, comme cela est représenté sur la Fig.3, vers la position extraite de service représentée sur la Fig.4.

Pendant ce déplacement, la soupape tarée 17 empêche le liquide de lavage d'accéder au canal 16 de la tige de piston débouchant dans le gicleur 9, afin d'obtenir une efficacité accrue de la poussée du liquide de lavage sur ce piston.

Ce piston se déplace jusqu'à une position extraite de service dans laquelle il vient en appui contre une surface de butée formée par exemple par un épaulement 22 du cylindre 7. L'augmentation de la pression de liquide de lavage dans la chambre arrière du piston, amène la soupape tarée 17 à se déplacer vers une position d'autorisation du passage du liquide de lavage vers le gicleur 9 dans le canal 16 d'alimentation de ce gicleur, comme on peut le voir sur la Fig.4, de sorte que du liquide de lavage est projeté contre la glace du bloc optique.

Cette opération se poursuit tant que l'utilisateur actionne la pompe des moyens d'alimentation en liquide de lavage du dispositif selon l'invention.

Lorsque l'utilisateur arrête l'actionnement de cette pompe, la pression dans la chambre arrière du cylindre diminue, de sorte que les moyens élastiques de rappel 15 peuvent ramener le piston 8 et donc l'extrémité libre de la tige de celui-ci portant le gicleur et l'enjoliveur, en position escamotée dans l'évidement 13 du bloc optique (Fig.2).

Dans l'exemple illustré sur cette figure, on peut noter que le piston porte-gicleur se déplace dans une direction à peu près perpendiculaire à la surface de la glace du bloc optique entre ses positions escamotée et extraite de service. Cependant, un déplacement suivant une autre incidence, peut également être prévu.

## Revendications

1. Bloc optique avec glace et dispositif escamotable de lavage de la glace intégré, notamment d'un véhicule automobile, du type comportant un gicleur (9) fixé sur la tige (8) d'un piston porte-gicleur monté coulissant à l'intérieur d'un cylindre (7) fixé sur un organe du véhicule, de manière à être mobile par rapport à la structure du véhicule entre une position escamotée dans la structure et une position extraite de service, des moyens d'alimentation (19) en liquide de lavage et des moyens élastiques (15) de rappel du piston porte-gicleur en position escamotée, caractérisé en ce que le bloc optique comporte un logement (11) dans lequel est prévue une paroi transversale (12) délimitant dans ce logement, d'un côté, un évidement (13) de réception de l'extrémité du piston porte-gicleur (8) portant le gicleur (9) et l'enjoliveur (10) et d'un autre côté, le cylindre de piston (7) et munie d'un évidement central (14) pour le passage de la tige de piston, de manière que le dispositif soit intégré dans le bloc optique (2).

2. Bloc selon la revendication 1, caractérisé en ce que le piston porte-gicleur (8) est monté déplaçable entre ses positions escamotée et extraite de service à peu près perpendiculairement à la surface de la glace du bloc optique.

3. Bloc selon la revendication 1 ou 2, caractérisé en ce que le piston porte-gicleur comporte à son extrémité libre, un enjoliveur (10) s'étendant dans le prolongement de la glace du bloc optique, en position escamotée.

4. Bloc selon la revendication 1,2 ou 3, caractérisé en ce que la chambre du cylindre (7) à l'arrière du piston (8), est reliée aux moyens (19) d'alimentation en liquide de lavage.

5. Bloc selon la revendication 4, caractérisé en ce que le piston porte-gicleur (8) comporte un canal (16) d'alimentation du gicleur (9), débouchant d'une part dans la chambre du cylindre (7) à l'arrière du piston portegicleur et d'autre part, dans le gicleur (9).

6. Bloc selon la revendication 5, caractérisé en ce qu'une soupape tarée (17) est prévue dans le canal, pour laisser passer le flux de liquide de lavage vers le gicleur lorsque celui-ci est en position extraite de service.

7. Bloc selon la revendication 5 ou 6, caractérisé en ce que les moyens élastiques de rappel comprennent un ressort hélicoïdal (15) disposé autour de la tige du piston porte-gicleur (8) dans la chambre de cylindre à l'avant du piston.

8. Bloc selon l'une quelconque des revendications précédentes, caractérisé en ce qu'il comporte des moyens de maintien du piston porte-gicleur (8) dans une orientation déterminée par rapport au reste du bloc optique (2).

9. Bloc selon la revendication 8, caractérisé en ce que les moyens de maintien comprennent une partie en saillie (20) de la paroi transversale (12) adaptée pour coopérer avec une rainure (21) de la tige du piston portegicleur.

## Claims

1. Headlamp assembly with glass and integral pivotable device for washing the glass, notably in a motor vehicle, of the type comprising a jet (9) fixed to the rod (8) of a jet-carrying piston slidably mounted inside a cylinder (7) fixed to a component of the vehicle, so as to be movable relative to the body of the vehicle between a position in which it is retracted into the body and an extended operating position, means (19) for supplying washing liquid and resilient means (15) for returning the jet-carrying piston into the retracted position, characterised in that the headlamp assembly comprises a housing (11) in which is provided a transverse wall (12) which defines within this housing, on one side, a recess (13) for receiving the end of the jet-carrying piston (8) carrying the jet (9) and the cover (10) and, on the other side, the piston cylinder (7), said transverse wall (12) being provided with a central cavity (14) for the piston rod to pass through, so that the device is integrally connected to the optical unit (2).

2. Assembly according to claim 1, characterised in that the jet-carrying piston (8) is displaceably mounted between its retracted position and its extended operating position substantially perpendicularly to the surface of the glass of the headlamp assembly.

3. Assembly according to claim 1 or 2 characterised in that the jet-carrying piston has at its free end a cover (10) extending along an extension of the glass of the headlamp assembly, in the retracted position.

4. Assembly according to claim 1, 2 or 3, characterised in that the chamber of the cylinder (7) at the rear of the piston (8) is connected to the means (19) for supplying washing liquid.

5. Assembly according to claim 4, characterised in that the jet-carrying piston (8) comprises a supply duct (16) for the jet (9), opening, at one end, into the chamber of the cylinder (7) behind the jet-carrying piston and, at the other end, into the jet (9).

6. Assembly according to claim 5, characterised in that a calibrated valve (17) is provided in the channel, to allow the flow of washing liquid through to the jet when the latter is in the extended operating position.

7. Assembly according to claim 5 or 6, characterised in that the resilient return means comprise a helical spring (15) arranged around the rod of the jet-carrying piston (8) in the cylinder chamber at the front of the piston.

8. Assembly according to any of the preceding claims, characterised in that it comprises means for holding the jet-carrying piston (8) in a specified orientation relative to the remainder of the headlamp assembly (2).

9. Assembly according to claim 8, characterised in that the holding means comprise a projecting portion (20) of the transverse wall (12) adapted to co-operate with a groove (21) in the rod of the jet-carrying piston.

## Patentansprüche

1. Beleuchtungseinheit mit einer Abdeckscheibe und einer integrierten einziehbaren Waschvorrichtung für diese Abdeckscheibe, insbesondere für Kraftfahrzeuge, von einer Konstruktion, welche eine Sprühdüse (9) aufweist, die an einem Gestänge (8) eines die Sprühdüse tragenden Kolbens befestigt ist, welcher gleitend innerhalb eines Zylinders (7), welcher an einem Organ des Kraftfahrzeuges angebracht ist, so aufgenommen ist, daß er gegenüber der Struktur des Kraftfahrzeuges zwischen einer in die Struktur eingezogenen Stellung und einer ausgefahrenen Betriebsstellung beweglich ist, sowie mit Speisemitteln (19) für die Waschflüssigkeit und mit elastischen Rückzugmitteln für den die Sprühdüse tragenden Kolben in die eingezogene Stellung,
**dadurch gekennzeichnet**, **daß** diese Beleuchtungseinheit eine Aufnahme (11) enthält, in der eine senkrechte Wand (12) vorgesehen ist, welche in dieser Aufnahme auf der einen Seite eine Aufnahme (13) für die Aufnahme des Endteils des Kolbens (8), welcher die Sprühdüse (9) und die Verkleidung (10) tragt und auf der anderen Seite den Zylinderkolben (7) eingrenzt und die mit einer zentralen Öffnung (14) für den Durchgang der Kolbenstange versehen ist, so daß diese Vorrichtung in die Beleuchtungseinheit (2) integriert ist.

2. Beleuchtungseinheit nach Anspruch 1,
**dadurch gekennzeichnet**, **daß** der die Sprühdüse tragende Kolben (8) zwischen einer eingezogenen und einer ausgefahrenen Betriebsstellung etwa rechtwinklig zu der Oberfläche der Abdeckscheibe der Beleuchtungseinheit verschiebbar montiert ist.

3. Beleuchtungseinheit nach einem der Ansprüche 1 oder 2,
**dadurch gekennzeichnet**, **daß** der die Sprühdüse tragende Kolben an seinem freien Ende eine Verkleidung (10) aufweist, welche sich in eingezogener Stellung in der Bahn der Abdeckscheibe der Beleuchtungseinheit erstreckt.

4. Beleuchtungseinheit nach einem der Ansprüche 1, 2 oder 3,
**dadurch gekennzeichnet**, **daß** die Kammer des Zylinders (7) an der Rückseite des Kolbens (8) an die Speisemittel (19) für Waschflüssigkeit angeschlossen ist.

5. Beleuchtungseinheit nach Anspruch 4,
**dadurch gekennzeichnet**, **daß** der die Sprühdüse tragende Kolben (8) einen Speisekanal (16) für die Sprühdüse (9) aufweist, welcher einerseits in die Kammer des Zylinders (7) an der Rückseite des die Sprühdüse tragenden Kolbens und andererseits in die Sprühdüse (9) mündet.

6. Beleuchtungseinheit nach Anspruch 5,
**dadurch gekennzeichnet**, **daß** in diesem Kanal ein geeichtes Ventil (17) angeordnet ist, um den Fluß der Waschflüssigkeit zu der Sprühdüse zu ermöglichen, wenn sich diese in ihrer ausgefahrenen Betriebsstellung befindet.

7. Beleuchtungseinheit nach einem der Ansprüche 5 oder 6,
**dadurch gekennzeichnet**, **daß** die elastischen Rückzugmittel eine Schraubenfeder (15) enthalten, welche um das Gestänge des die Sprühdüse tragenden Kolbens (8) in der Zylinderkammer vor diesem Kolben angeordnet ist.

8. Beleuchtungseinheit nach einem der vorstehenden Ansprüche,
**dadurch gekennzeichnet**, **daß** sie Haqlterungsmittel für den die Sprühdüse tragenden Kolben (8) in einer bestimmten Ausrichtung gegenüber dem restlichen Teil der Beleuchtungseinheit (2) enthält.

9. Beleuchtungseinheit nach Anspruch 8,
**dadurch gekennzeichnet**, **daß** diese Halterungsmittel einen vorspringenden Teil (20) der senkrechten Wand (12) umfassen, der so ausgelegt ist, daß er mit einer Nut (21) im Gestänge des die Sprühdüse tragenden Kolbens zusammenwirkt.
